# EUROPEAN PATENT SPECIFICATION

(11) **EP 3 066 816 B1**
(45) Date of publication and mention of the grant of the patent: **28.02.2018**
(21) Application number: 13802126.6
(22) Date of filing: 08.11.2013
(51) Int. Cl.: H04L 29/08, G06F 3/0482, H04M 1/725

(54) **METHOD AND DEVICE FOR THE MANAGEMENT OF APPLICATIONS**
ANWENDUNGSMANAGEMENTVERFAHREN UND GERÄT
PROCÉDÉ ET DISPOSITIF POUR LA GESTION DES APPLICATIONS

(43) Date of publication of application: 14.09.2016
(73) Proprietor: Telefonaktiebolaget LM Ericsson (publ), 164 83 Stockholm (SE)
(72) Inventor: LIANG, Hongxin, S-194 79 Upplands Väsby (SE); MAZMANOV, Dimitri, S-170 67 Solna (SE)
(74) Representative: Ericsson
(86) International application number: PCT/SE2013/051318
(87) International publication number: WO 2015/069162

(56) References cited:
- US-A1- 2005 222 918
- US-A1- 2009 061 890
- US-A1- 2011 072 492

## Description

### TECHNICAL FIELD

The present disclosure relates to communication networks and, more particularly, to managing the distribution and operation of applications on user terminals.

### BACKGROUND

Increasingly, users install a wide range of applications (also commonly referred to as "apps") on a wide range of user terminals, such as cellular telephones, tablet computers, and personal computers. Such applications may be downloaded from a "marketplace" or "application store," which may be managed by as a single organization, typically by a cellular telephone service provider or device manufacturer. Accordingly, managing entity is able to serve applications (both free and paid) for download to user terminals.

The downloading process typically involves a user executing an application store application and entering a key word that is to be used to search for a desired application. Alternatively, the user may select among buttons representing categories of applications, such as "games" or "featured." In either case, the user is presented with a list of applications from which to choose.

The limited amount of memory storage space that is available within user terminals can create an undesired burden on users to manage which individual applications reside on a user terminal. Users can delete individual applications to free-up space in memory to allow downloading of a new application. A listing of applications that are on the user terminal may be backed-up to the application store (e.g., a cloud network node). Applications that have been previously downloaded but back-up to the cloud network node may be viewable as a list for consideration to allow a user to select individual applications to be re-downloading from the cloud network node. In view of some users downloaded for testing or use of hundreds or thousands of applications over time, it can place an undesirable/unreasonable burden on a user to remember the functionality of individual applications and any similar or complementary functionality provided by different particular applications which the user may have earlier found to be beneficial as a collective group on the user terminal.

The approaches described in this section could be pursued, but are not necessarily approaches that have been previously conceived or pursued. Therefore, unless otherwise indicated herein, the approaches described in this section are not prior art to the claims in this application and are not admitted to be prior art by inclusion in this section.

Document US-2011/072492 discloses the enabling and disabling of applications in a mobile terminal depending on the context.

### SUMMARY

It may therefore be an object to address at least some of the above mentioned disadvantages and/or to provide improved management of applications that are executable on user terminals.

One embodiment is directed to a method by a user terminal for managing applications that are executable by the user terminal. The method includes generating folder information that defines folders of the applications. Action rule information is generated which defines, for each of the folders of applications, an action to be performed on the folder of applications and a rule that initiates performance of the action. A first one of the rules is determined to be satisfied. A first one of the folders of the applications is selected which is associated with the satisfied first one of the rules. Applications are identified which are missing from a memory of the user terminal that are members of the selected first one of the folders of the applications. The identified applications are downloaded from an application storage node via a network to the memory of the user terminal.

A potential advantage of this and further embodiments is that a user can group applications into folders, and define action rules that cause defined actions to be performed on particular ones of the folders of applications when the associated actions rules are satisfies. Thus, for example, a user can group one set of applications into a first folder and another set of applications into a second folder, and can define action rules that cause the applications in the first folder to be deleted from the user terminal (e.g., to free-up memory space) and the applications in the second folder are to be downloaded from a network node to the user terminal based on arriving in a defined city. The user may similarly define rules that cause the applications in the second folder to be deleted from the user terminal (e.g., to free-up memory space) and the applications in the first folder are to be downloaded from the network node to the user terminal based on departing the defined city or arriving at another defined location. Such downloading and deleting operation may be performed automatically without intervention of the user or the user may be queried to allow these operations.

Another embodiment is directed to a method by at least one network node, which includes a folder ID repository node of a distributed computing system, for managing which applications are downloaded to user terminals. The method includes receiving folder information via the network from a plurality of user terminals. The folder information defines folders of applications that the user terminals can select among for downloading. A query is received from one of the user terminals that identifies a search criteria for searching among the folders of applications defined by the folder information. One of the folders of applications is identified that satisfies the search criteria. A list of the applications within the identified one of the folders of applications is communicated to the one of the user terminals.

Related user terminals and network nodes are disclosed.

Other methods and apparatuses according to embodiments of the invention will be or become apparent to one with skill in the art upon review of the following drawings and detailed description. It is intended that all such additional methods and apparatuses be included within this description, be within the scope of the present invention, and be protected by the accompanying claims. Moreover, it is intended that all embodiments disclosed herein can be implemented separately or combined in any way and/or combination.

### BRIEF DESCRIPTION OF THE DRAWINGS

The accompanying drawings, which are included to provide a further understanding of the disclosure and are incorporated in and constitute a part of this application, illustrate certain non-limiting embodiment(s) of the invention. In the drawings:
Figure 1 is a block diagram of an application management system that is configured to operate according to some embodiments;
Figures 2-6 illustrate example user interfaces on a user terminal for generating folders of applications and defining associated actions and rules for managing the folders of applications, according to some embodiments;
Figure 7 is a data flow diagram illustrating example operations and methods for managing applications in folders responsive to associated action rules, according to some embodiments;
Figures 8-14 and are flowcharts of operations and methods performed by a user terminal to generate folders of applications and defining associated action rules for managing applications within the folders of applications, according to some embodiments;
Figures 15-17 are flowcharts of operations and methods performed by one or more network nodes of an application management system to manage applications within folders provided to a user terminal, according to some embodiments;
Figure 18 is a block diagram of an example network node in an application management system configured to operate according to some embodiments.

### DETAILED DESCRIPTION

The invention will now be described more fully hereinafter with reference to the accompanying drawings, in which embodiments of the invention are shown. This invention may, however, be embodied in many different forms and should not be construed as limited to the embodiments set forth herein.

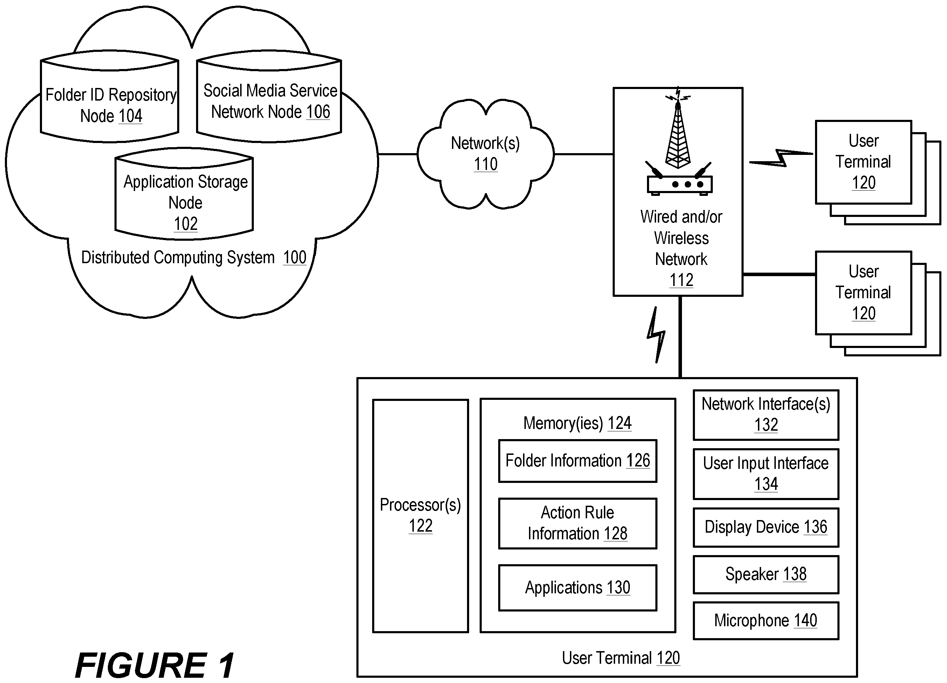

Figure 1 is a block diagram of an application management system that is configured to operate according to some embodiments. The system includes a plurality of user terminals 120 that communicate through a wired and/or wireless network 112 and one or more data networks 110 (e.g., wide area networks, Internet) with a distributed computing system 100 containing an application storage node 102, a social media service network node 106, and a folder ID repository node 104. Although the folder ID repository node 104, the application storage node 102, and the social media service network node 106 are illustrated in Figure 1 as separate network nodes, some or all of the functionality of two or more of these nodes may be combined within a same network node in accordance with some embodiments.

The user terminals 120 download applications via the data network 110 and wired/wireless network 112 from the application storage node 102, which may correspond to the Android® marketplace or Apple iTunes® application store, to one or more memories 124 of the user terminals 120. The user terminals 120 can be any type of electronic devices that can download and execute such applications, and can include, but are not limited to, fixed/mobile/transportable terminals (e.g., smart phones, tablet computers, desktop computers), televisions, appliances, and/or gaming consoles.

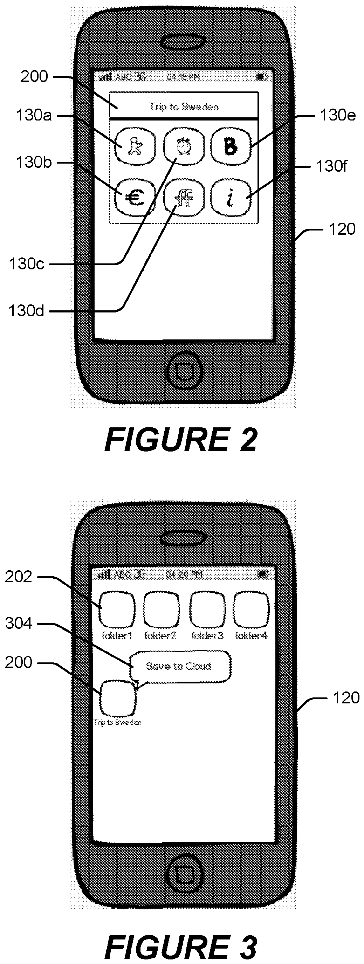

Various embodiments disclosed herein enable users to group applications into folders and, for each of the folders, to define an action that is to be performed on the collective group of applications within the associated folder, and a rule that initiates performance of the action. Some of these embodiments are now explained with regard to Figures 2-6, which illustrate non-limiting example user interfaces that may be displayed on a display device 136 of the user terminal 120 for generating folders of applications and defining associated actions and triggering rules for managing applications within the folders of applications.

Referring to the embodiment of Figure 2, the user has controlled the user terminal 120 (e.g., through a user input interface 134 via conventional or new operations disclosed herein) to group six different applications 130a-f into one shared folder 200 that is designated (e.g., named "Trip to Sweden") for use during a upcoming trip by the user to Sweden. One or more of the applications 130a-f may presently reside in the memory 124 of the user terminal 120 or may reference corresponding application(s) that can be downloaded from the application storage node 102.

Referring to the embodiment of Figure 3, the user has similarly controlled the user terminal 120 to group applications within four other folders (e.g., "folder1", "folder2", "folder3", and "folder4"). Moreover, in accordance with one embodiment, the user can select a folder (e.g., by touch selecting the folder and maintaining the selection for a threshold time) to cause a user selectable action 304 (e.g., "save to cloud") to be displayed, which the user can select to save the folder information (identify the folder name and the collection of applications in the folder) in the folder ID repository node 104 for future reference and enable downloading of the applications identified by the folder information as a collective group from the application storage node 102. The user may thereby, for example, perform an action to delete the folder named "Trip to Sweden" to cause the applications 130a-f to be deleted from the memory 124, and thereafter operate the user terminal 120 to perform another action that causes the folder named "Trip to Sweden" and the applications contained therein to be collectively downloaded to the memory 124 of the user terminal 120.

A potential advantage is that by allowing a user to save the folder information in the folder ID repository node 104, and thereafter allowing the user to obtain the folder information from the folder ID repository node 104 and cause the collection of applications within the folder to be downloaded together from the application storage node 102, the user's management of which applications reside on the user terminal 120 can be simplified. Moreover, in accordance with further embodiments herein, the user can define these and other actions that operate on all applications with a folder and rules that cause the actions to be performed.

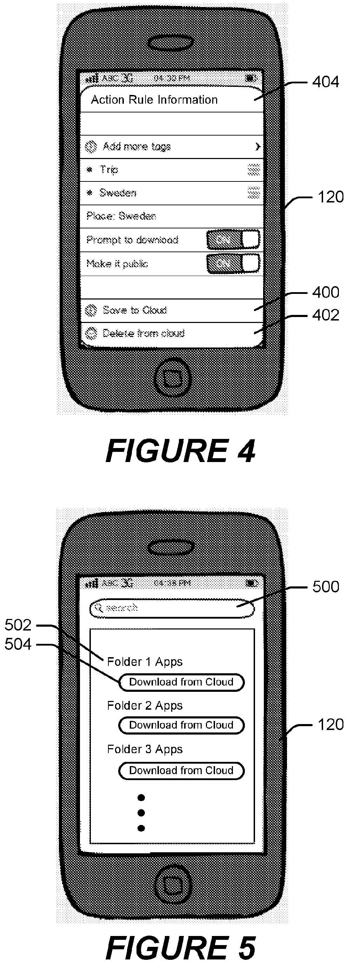

Referring to the embodiment of Figure 4, the user terminal 120 displays a user interface that allows the user to generate action rule information 404 that defines an action to be performed on the collection of applications 130a-f in the "Trip to Sweden" folder, and a rule that initiates performance of the action. In the example, the user has defined with the information 404 an action that causes the user terminal 120 to prompt the user for permission to download ("prompt to download") the folder of applications defined as "Trip to Sweden" and, when permission is granted, causes the folder of applications 130a-f to be automatically downloaded from the application storage node 102 without further action of the user. The user further defines through the information 404 a rule that initiates performance of that action based on where the user terminal 120 is located, such as a rule that is satisfied when the user terminal 404 becomes located at a defined location (Sweden).

The user can also select an interface setting ("make it public") that is displayed to make the name of the folder and its defined applications 130a-f public, which causes the user terminal 120 to generate a message containing an address link that can be used by other user terminals 120 to retrieve at least a portion of the folder information from the folder ID repository node 104, and communicate the message to other user terminals 120 and/or to the social media service network node 106 (e.g., post the message for users of the other terminal 120 to read) for retrieval by the other user terminals 120. Through related operations, when the user makes a folder public, the folder ID repository node 104 changes the visibility of the folder from a private privilege setting to a public privilege setting. The private privilege setting may be a default setting for all folders saved to the folder ID repository node 104, and the private privilege setting can prevent other users from seeing the folder and its listing of applications when those users conduct searches. In contrast, the public privilege setting allows other users to identify the folder, such as through a search operation and/or using an address link that has been posted to social media or provided through a message to the other users, and access the listing of applications provided by the folder.

The user can select an interface setting "save to cloud" that is displayed to cause the folder information (identity of the folder name and the collection of applications in the folder) to be saved in the folder ID repository node 104 for future reference and enable downloading of the applications identified by the folder information as a collective group from the application storage node 102. The user can similarly select an interface setting "delete from cloud" that is displayed to cause the folder information (identity of the folder name and the collection of applications in the folder) to be deleted from the folder ID repository node 104, which prevents future reference therefrom.

Referring to the embodiment of Figure 5, the user terminal 120 displays another user interface that allows the user to touch select one of a plurality of indicia "Download from Cloud" 504 that are displayed adjacent to the respective names 502 of folders of applications that the user has generated, to cause the user terminal 120 to download the collection of applications grouped in "Folder1", "Folder2", "Folder3 ", etc, that is associated with the touch selected indicia. A search input interface 500 is displayed that allows a user to enter search criteria that can be used to search within the folder ID repository node 104 to identify folders of applications that have attributes which satisfy the search criteria. The folder attributes may include, but are not limited to, folder names, application names within each folder, operational functionality provided by one or more applications within a folder, ratings by the user or by other users for a folder and/or for one or more applications within a folder, etc.

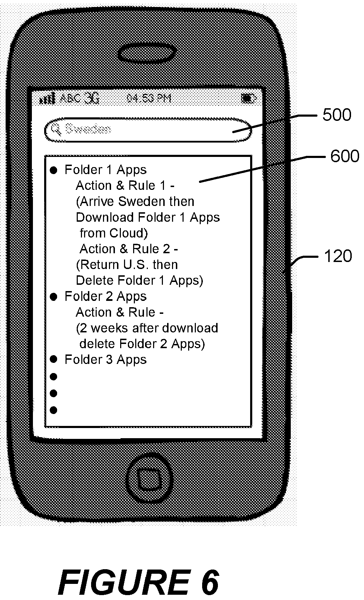

Referring to the embodiment of Figure 6, the user terminal 120 displays another user interface 600 that identifies the names of three folders of applications, and further identifies one or more actions associated rules for carrying out the actions. For example, the "Folder1 Apps" folder has a defined action for downloading the applications within the folder from the cloud (e.g., application storage node 102) to the memory 124 in response to a defined rule being satisfied for arriving in Sweden (e.g., displayed as "arrive Sweden then download folder one apps from cloud"). The "Folder1 Apps" folder has another defined action for deleting the applications within the folder from the memory 124 in response to a defined rule of two weeks having passed after the applications were downloaded to the memory 124 (e.g., displayed as "2 weeks after download delete Folder 2 Apps").

Thus, some non-limiting examples of rules can include, a first one of the rules defining a geographic area, where the rule is determined to be satisfied based on determining that the user terminal 120 has moved to the geographic area. Another one of the rules can define an elapsed time, and the rule is determined to be satisfied based on determining that the elapsed time has elapsed since the associated folders of application was downloaded from the application storage node 102 to the memory 124 of the user terminal 120. Still another one of the rules can define a geographic area, and the rule is determined to be satisfied based on determining that the user terminal 120 has returned to the geographic area after being determined to have left the geographic area.

Referring again to Figure 1, the example user terminal 120 includes a processor 122, memory 124, network interface 132, the user input interface 134, the display device 136, may further include a speaker 138 and/or a microphone 140. The network interface 132 include one or more wired and/or wireless communication circuits, which may include but are not limited to a cellular transceiver, a wired network interface, a wireless local area network transceiver, a Bluetooth transceiver, and/or a near field communication transceiver.

The processor 122 may include one or more data processing circuits, such as a general purpose and/or special purpose processor (e.g., microprocessor and/or digital signal processor), which may be collocated or distributed across one or more data networks (e.g., network 110). The processor 122 is configured to execute computer program instructions from applications 130 (e.g., applications 130a-f of Figure 2) and an application manager 125 in the memory 124, described below as a computer readable medium. The application manager 125 manages action that are performed on the folders of applications based on the folder information 126 and action rule information 128 that is defined in the memory 124 and/or which is obtained from the folder ID repository node 104 to perform some or all of the operations and methods for one or more of the embodiments disclosed herein, such as the embodiments of Figures 1-17.

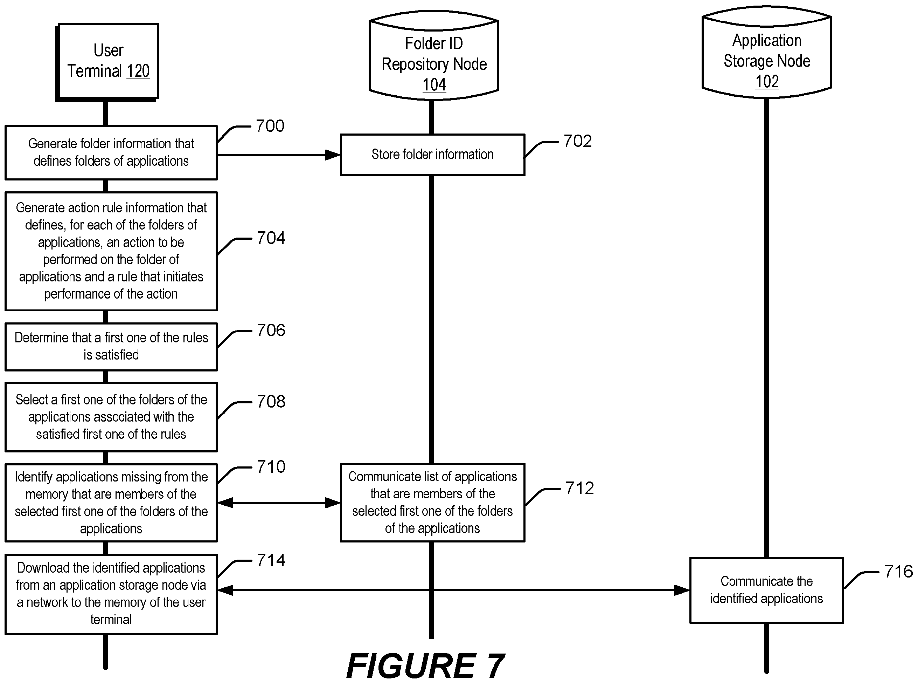

These and other more general embodiments are now described with reference to the embodiment of Figure 7, which is a data flow diagram illustrating example operations and methods for managing applications in folders defined in the memory 124 responsive to associated actions and rules. The user terminal 120 generates 700 folder information that defines folders of the applications (e.g., responsive to input from the user). The user terminal 120 generates 704 action rule information that defines, for each of the folders of applications, an action to be performed on the folder of applications and a rule that initiates performance of the action (e.g., responsive to further input from the user). The user terminal 120 determines 706 that a first one of the rules ("first rule") is satisfied, and, based thereon, selects 708 a first one of the folders of the applications ("selected first folder") associated with the satisfied first rule. The user terminal 120 identifies 710 applications missing from a memory 124 of the user terminal 120 that are members of the selected first folder. The identification 710 may be carried out at a folder-by-folder level by determining that the selected first folder is missing from the memory 124, or may be carried out at an application-by-application level identifying for each of the applications within the selected first folder whether that particular application already resides in the memory 124. The user terminal 120 downloads 714 the identified applications from the application storage node 102 (which communicates 716 the applications), via the network 110, to the memory 124 of the user terminal 120.

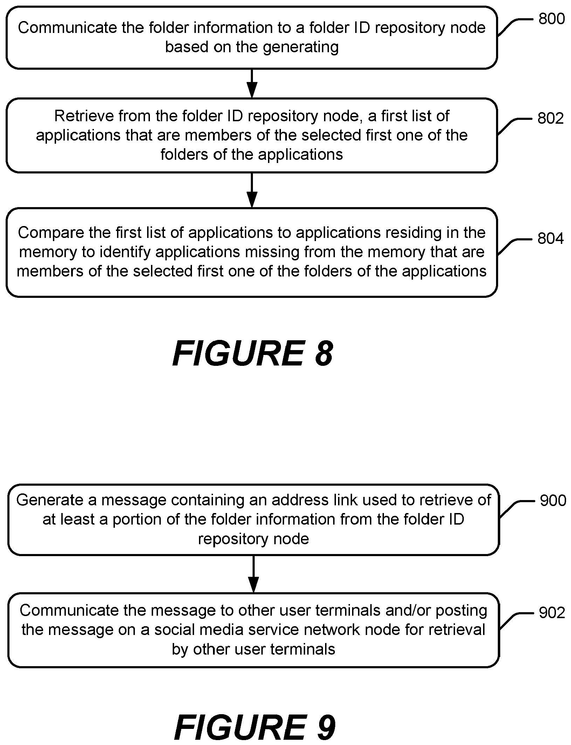

Referring to the embodiments of Figures 7 and 8, the user terminal 120 may communicate 800 the folder information to the folder ID repository node 104 via the network 110 for storage 702 and for future retrieval by the user terminal 120 and/or by other user terminals 120 (e.g., such as via the social media service network node 106 and/or via a message sent to the other user terminals 120).

A potential advantage is that storing the folder information in the folder ID repository node 104 may be particularly useful to enable retrieval of that information after the folder and application therein have been deleted from the memory 120 for the user terminal 120.

To identify 710 applications missing from the memory 124 of the user terminal 120 that are members of the selected first folder, the user terminal 120 can retrieve 712/802 from the folder ID repository node 104 via the network, a first list of applications that are members of the selected first folder, and can compare 804 the first list of applications to applications residing in the memory 124 of the user terminal 120 to identify applications missing from the memory 124 of the user terminal 120 that are members of the selected first folder.

As explained above, folder information identifying folder names and application contents of folders can be shared with other user terminals 120. Referring to the embodiment of Figure 9, the mobile terminal 120 can generate 900 a message containing an address link used to retrieve of at least a portion of the folder information from the folder ID repository node 104, and can communicate 902 the message to the other user terminals 120 and/or post the message on the social media service network node 106 for retrieval by the other user terminals 120.

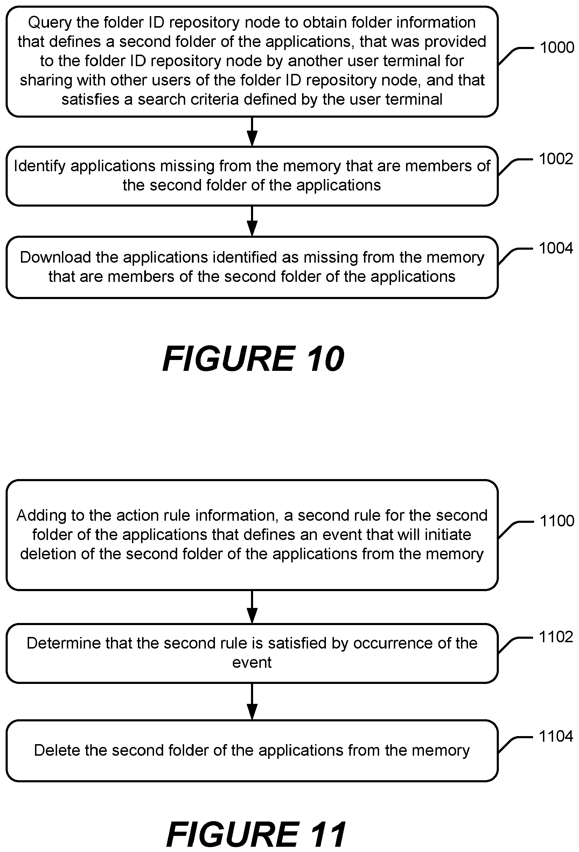

Referring to the embodiment of Figure 10, the mobile terminal 120 may perform the sharing by querying 1000 the folder ID repository node 104 to obtain folder information that defines a second folder of the applications ("second folder"), that was provided to the folder ID repository node 104 by another user terminal 120 for sharing with other users of the folder ID repository node 104, and that satisfies a search criteria defined by the user terminal 120. Thus, for example, the mobile terminal 120 may send a query containing user defined search criteria to the folder ID repository node 104 to identify folders containing applications that satisfy the search criteria. The mobile terminal 120 identifies 1002 applications missing from the memory 124 of the user terminal 120 that are members of the second folder (e.g., perform the folder-by-folder basis or an application-by-application basis), and can download 1004, via the network 110 to the memory 124 of the user terminal 120, the applications identified as missing from the memory 124 of the user terminal 120 that are members of the second folder.

Referring to the embodiment of Figure 11, the user terminal 120 adds 1100 a second rule for the second folder that defines an event that will initiate deletion of the second folder (the applications grouped in the second folder) from the memory 124 of the user terminal 120. The user terminal 120 determines 1102 that the second rule is satisfied by occurrence of the event, and deletes 1104 the second folder from the memory 124 of the user terminal 120.

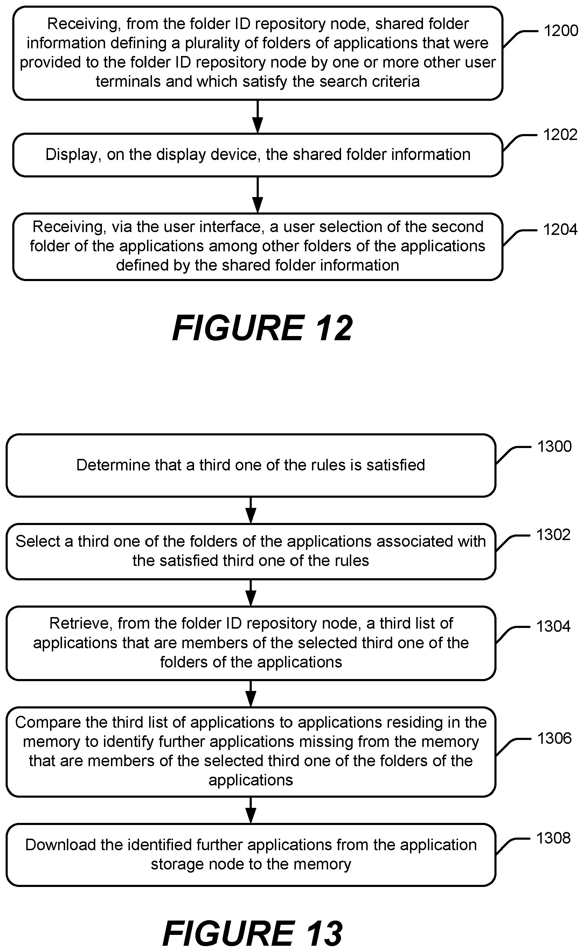

Referring to the embodiments of Figures 10 and 12, the step of querying 1000 the folder ID repository node 104 to obtain folder information that defines the second folder, the user terminal 120 can include receiving 1200, from the folder ID repository node 104, shared folder information defining a plurality of folders of applications that were provided to the folder ID repository node 104 by one or more other user terminals (120) and which satisfy the search criteria. The user terminal 120 can display 1202, on the display device 136, the shared folder information, and receive 1204, via the user input interface 134, a user selection of the second folder among other folders of the applications defined by the shared folder information.

Referring to the embodiment of Figure 13, the user terminal 120 can determine 1300 that a third one of the rules ("third rule") is satisfied and, based thereon, selecting 1302 a third one of the folders of the applications ("selected third folder") associated with the satisfied third rule. The user terminal 120 can retrieve 1304, from the folder ID repository node 104 via the network 110, a third list of applications that are members of the selected third folder, compare 1306 the third list of applications to applications residing in the memory 124 of the user terminal 120 to identify further applications missing from the memory 124 that are members of the selected third folder, and download 1306 the identified further applications from the application storage node 102 via the network 110 to the memory 124.

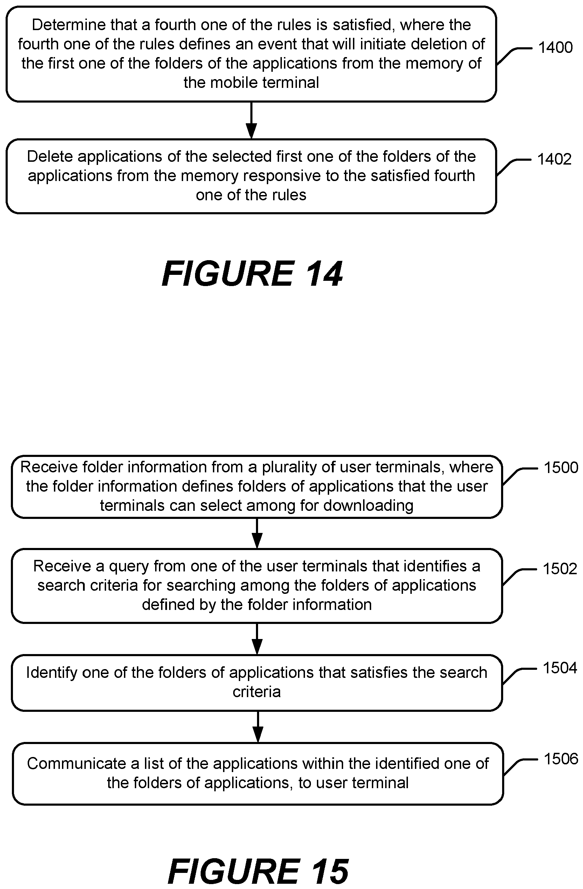

Referring to the embodiment of Figure 14, the user terminal 120 can determine 1400 that a fourth one of the rules is satisfied, where the fourth one of the rules defines an event that will initiate deletion of the first folder (the applications grouped in the first folder) from the memory 124 of the user terminal 120 and, based thereon, delete 1402 applications of the selected first folder from the memory 124 of the user terminal 120 responsive to the satisfied fourth one of the rules.

Corresponding operations and methods that can be performed by the folder ID repository node 104 and/or another network node to manage applications are downloaded to user terminals 120 and enable sharing of folders information between user terminals 120, will now be described in the context of the embodiments of Figures 15-17. For ease of reference, the example operations are described in the context of being performed by the folder ID repository node 104 although they may be for performed at least partially or entirely by another network node.

Referring to the embodiment of Figure 15, folder information is received 1500 via the network 110 from a plurality of user terminals 120, where the folder information defines folders of applications that the user terminals 120 can select among for downloading. A query is received 1502 from one of the user terminals 120 that identifies a search criteria for searching among the folders of applications defined by the folder information, and the folder ID repository node 104 identifies 1504 one of the folders of applications that satisfies the search criteria. The folder ID repository node 104 communicates 1506 a list of the applications within the identified one of the folders of applications, to the one of the user terminals 120.

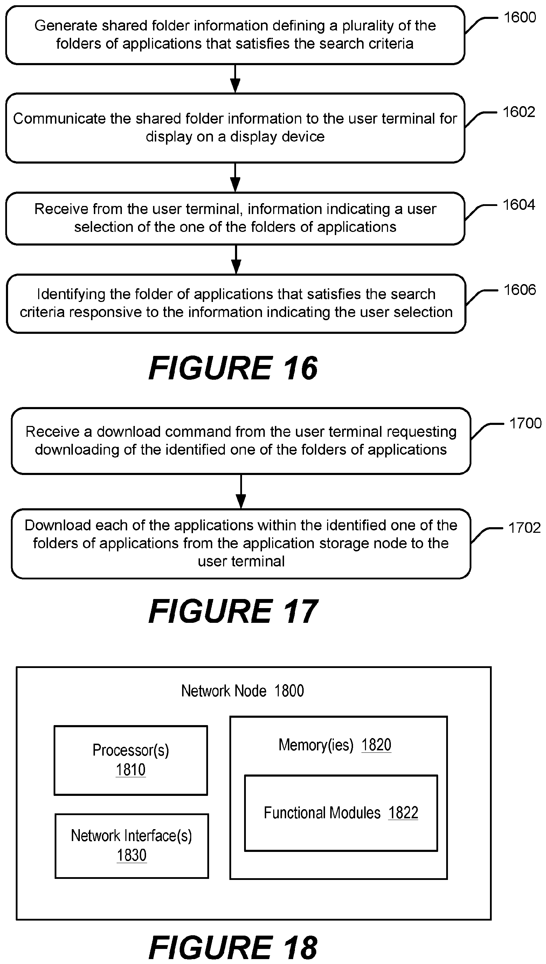

Referring to the further embodiment of Figure 16, shared folder information defining a plurality of the folders of applications that satisfies the search criteria is generated 1600. The shared folder information is communicated 1602 to the one of the user terminals 120 for display on the display device 136. Information indicating a user selection of the one of the folders of applications is received 1604 from the one of the user terminals (120), and the one of the folders of applications that satisfies the search criteria responsive to the information indicating the user selection is identified 1606.

Referring to the further embodiment of Figure 17, the at least one node further includes the application storage node 102 that stores applications. The folder ID repository node 104 receives 1700 a download command from the one of the user terminals 120 requesting downloading of the identified one of the folders of applications, and downloads 1702 each of the applications within the identified one of the folders of applications from the application storage node 102 to the one of the user terminals 120.

### Example Network Node:

Figure 18 is a block diagram of an example network node 18, which may be used for the application storage node 102, the folder ID repository node 14, and/or the social media service network node 106. The network node 1800 can include a network interface 1830, a processor 1810, and a memory 1820 that contain functional modules 1822. The processor 1810 may include one or more data processing circuits, such as a general purpose and/or special purpose processor (e.g., microprocessor and/or digital signal processor), which may be collocated or distributed across one or more data networks (e.g., network 110). The processor 1810 is configured to execute computer program instructions from the functional modules 1822 in the memory 1820, described below as a computer readable medium, to perform some or all of the operations and methods that are described above for one or more of the embodiments disclosed herein, such as the embodiments of Figures 1- 17.

### Further Definitions and Embodiments:

In the above-description of various embodiments of the present invention, it is to be understood that the terminology used herein is for the purpose of describing particular embodiments only and is not intended to be limiting of the invention. Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of this specification and the relevant art and will not be interpreted in an idealized or overly formal sense expressly so defined herein.

When an element is referred to as being "connected", "coupled", "responsive", or variants thereof to another element, it can be directly connected, coupled, or responsive to the other element or intervening elements may be present. In contrast, when an element is referred to as being "directly connected", "directly coupled", "directly responsive", or variants thereof to another element, there are no intervening elements present. Like numbers refer to like elements throughout. Furthermore, "coupled", "connected", "responsive", or variants thereof as used herein may include wirelessly coupled, connected, or responsive. As used herein, the singular forms "a", "an" and "the" are intended to include the plural forms as well, unless the context clearly indicates otherwise. Well-known functions or constructions may not be described in detail for brevity and/or clarity. The term "and/or" or "/" includes any and all combinations of one or more of the associated listed items.

As used herein, the terms "comprise", "comprising", "comprises", "include", "including", "includes", "have", "has", "having", or variants thereof are open-ended, and include one or more stated features, integers, elements, steps, components or functions but does not preclude the presence or addition of one or more other features, integers, elements, steps, components, functions or groups thereof. Furthermore, as used herein, the common abbreviation "e.g.", which derives from the Latin phrase "exempli gratia," may be used to introduce or specify a general example or examples of a previously mentioned item, and is not intended to be limiting of such item. The common abbreviation "i.e.", which derives from the Latin phrase "id est," may be used to specify a particular item from a more general recitation.

Example embodiments are described herein with reference to block diagrams and/or flowchart illustrations of computer-implemented methods, apparatus (systems and/or devices) and/or computer program products. It is understood that a block of the block diagrams and/or flowchart illustrations, and combinations of blocks in the block diagrams and/or flowchart illustrations, can be implemented by computer program instructions that are performed by one or more computer circuits. These computer program instructions may be provided to a processor circuit of a general purpose computer circuit, special purpose computer circuit, and/or other programmable data processing circuit to produce a machine, such that the instructions, which execute via the processor of the computer and/or other programmable data processing apparatus, transform and control transistors, values stored in memory locations, and other hardware components within such circuitry to implement the functions/acts specified in the block diagrams and/or flowchart block or blocks, and thereby create means (functionality) and/or structure for implementing the functions/acts specified in the block diagrams and/or flowchart block(s).

These computer program instructions may also be stored in a tangible computer-readable medium that can direct a computer or other programmable data processing apparatus to function in a particular manner, such that the instructions stored in the computer-readable medium produce an article of manufacture including instructions which implement the functions/acts specified in the block diagrams and/or flowchart block or blocks.

A tangible, non-transitory computer-readable medium may include an electronic, magnetic, optical, electromagnetic, or semiconductor data storage system, apparatus, or device. More specific examples of the non-transitory computer-readable medium would include the following: a portable computer diskette, a random access memory (RAM) circuit, a read-only memory (ROM) circuit, an erasable programmable read-only memory (EPROM or Flash memory) circuit, a portable compact disc read-only memory (CD-ROM), and a portable digital video disc read-only memory (DVD/BlueRay).

The computer program instructions may also be loaded onto a computer and/or other programmable data processing apparatus to cause a series of operational steps to be performed on the computer and/or other programmable apparatus to produce a computer-implemented process such that the instructions which execute on the computer or other programmable apparatus provide steps for implementing the functions/acts specified in the block diagrams and/or flowchart block or blocks. Accordingly, embodiments of the present invention may be embodied in hardware and/or in software (including firmware, resident software, micro-code, etc.) that runs on a processor such as a digital signal processor, which may collectively be referred to as "circuitry," "a module" or variants thereof.

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Finally, other blocks may be added/inserted between the blocks that are illustrated. Moreover, although some of the diagrams include arrows on communication paths to show a primary direction of communication, it is to be understood that communication may occur in the opposite direction to the depicted arrows.

Many different embodiments have been disclosed herein, in connection with the above description and the drawings. It will be understood that it would be unduly repetitious and obfuscating to literally describe and illustrate every combination and subcombination of these embodiments. Accordingly, the present specification, including the drawings, shall be construed to constitute a complete written description of various example combinations and subcombinations of embodiments and of the manner and process of making and using them, and shall support claims to any such combination or subcombination.

Many variations and modifications can be made to the embodiments without substantially departing from the principles of the present invention. All such variations and modifications are intended to be included herein within the scope of the present invention.

## Claims

1. A method by a user terminal (120) for managing applications executable by the user terminal (120), the method comprising the steps of:
generating (700) folder information that defines folders of the applications and storing the folder information in a repository node;
generating (704) action rule information that defines, for each of the folders of applications, an action to be performed on the folder of applications and a rule that initiates performance of the action;
determining (706) that a first one of the rules is satisfied;
selecting (708) a first one of the folders of the applications associated with the satisfied first one of the rules;
identifying (710) applications missing from a memory (124) of the user terminal (120) that are members of the selected first one of the folders of the applications by retrieving a list of applications from the repository node; and
downloading (714) the identified applications from an application storage node (102) via a network (110) to the memory (124) of the user terminal (120).

2. The method of Claim 1,
further comprising the step of communicating (700, 800) the folder information to a folder identification, ID, repository node 104 via the network based on the generating; and wh
erein the step of identifying (710) applications missing from the memory (124) of the user terminal (120) that are members of the selected first one of the folders of the applications, comprises:
retrieving (802) from the folder ID repository node (104) via the network, a first list of applications that are members of the selected first one of the folders of the applications; and
comparing (804) the first list of applications to applications residing in the memory (124) of the user terminal (120) to identify applications missing from the memory (124) of the user terminal (120) that are members of the selected first one of the folders of the applications.

3. The method of Claim 2, further comprising the steps of:
generating (900) a message containing an address link used to retrieve of at least a portion of the folder information from the folder ID repository node (104); and
communicating (902) the message to other user terminals (120) and/or posting the message on a social media service network node for retrieval by other user terminals (120).

4. The method of Claim 2, further comprising the steps of:
querying (1000) the folder ID repository node (104) to obtain folder information that defines a second folder of the applications, that was provided to the folder ID repository node (104) by another user terminal (120) for sharing with other users of the folder ID repository node (104), and that satisfies a search criteria defined by the user terminal (120);
identifying (1002) applications missing from the memory (124) of the user terminal (120) that are members of the second folder of the applications; and
downloading (1004), via the network (110) to the memory (124) of the user terminal (120), the applications identified as missing from the memory (124) of the user terminal (120) that are members of the second folder of the applications.

5. The method of Claim 4, further comprising the step of:
adding (1100) to the action rule information, a second rule for the second folder of the applications that defines an event that will initiate deletion of the second folder of the applications from the memory (124) of the user terminal (120);
determining (1102) that the second rule is satisfied by occurrence of the event; and
deleting (1104) the second folder of the applications from the memory (124) of the user terminal (120).

6. The method of Claim 4, wherein the step of querying (1000) the folder ID repository node (104) to obtain folder information that defines the second folder of the applications, comprises:
receiving (1200), from the folder ID repository node (104), shared folder information defining a plurality of folders of applications that were provided to the folder ID repository node (104) by one or more other user terminals (120) and which satisfy the search criteria;
displaying (1202), on a display device of the user terminal (120), the shared folder information; and
receiving (1204), via a user interface of the user terminal (120), a user selection of the second folder of the applications among other folders of the applications defined by the shared folder information.

7. The method of any of Claims 2-6, further comprising the steps of:
determining (1300) that a third one of the rules is satisfied;
selecting (1302) a third one of the folders of the applications associated with the satisfied third one of the rules;
retrieving (1304), from the folder ID repository node (104) via the network, a third list of applications that are members of the selected third one of the folders of the applications;
comparing (1306) the third list of applications to applications residing in the memory (124) of the user terminal (120) to identify further applications missing from the memory (124) of the user terminal (120) that are members of the selected third one of the folders of the applications; and
downloading (1306) the identified further applications from the application storage node (102) via the network to the memory (124) of the user terminal (120).

8. The method of any of Claims 1-7, further comprising the steps of:
determining (1400) that a fourth one of the rules is satisfied, wherein the fourth one of the rules defines an event that will initiate deletion of the first one of the folders of the applications from the memory (124) of the user terminal (120); and
deleting (1402) applications of the selected first one of the folders of the applications from the memory (124) of the user terminal (120) responsive to the satisfied fourth one of the rules.

9. The method of any of Claim 1-8, wherein:
the first one of the rules defines a geographic area; and
the step of determining (706) that the first one of the rules is satisfied, comprises determining (404) that the user terminal (120) has moved to the geographic area.

10. The method of Claim 8, wherein:
the fourth one of the rules defines an elapsed time; and
the step of determining (1600) that the fourth one of the rules is satisfied, comprises determining (404) that the elapsed time has elapsed since the first one of the folders of the applications was downloaded from the application storage node (102) to the memory (124) of the user terminal (120).

11. The method of any of Claims 8, wherein:
the fourth one of the rules defines a geographic area; and
the step of determining (1600) that the fourth one of the rules is satisfied, comprises determining (404) that the user terminal (120) has returned to the geographic area after being determined to have left the geographic area.

12. A user terminal (120) comprising:
at least one processor (122); and
at least one memory (124) coupled to the at least one processor (122) and comprising computer readable program code embodied in the at least one memory (124) that when executed by the at least one processor (122) causes the at least one processor (122) to perform operations comprising:
generating (700) folder information that defines folders of the applications and storing the folder information in a repository node;
generating (704) action rule information that defines, for each of the folders of applications, an action to be performed on the folder of applications and a rule that initiates performance of the action;
determining (706) that a first one of the rules is satisfied;
selecting (708) a first one of the folders of the applications associated with the satisfied first one of the rules;
identifying (710) applications missing from a memory (124) of the user terminal (120) that are members of the selected first one of the folders of the applications by retrieving a list of applications from the repository node; and
downloading (714) the identified applications from an application storage node (102) via a network to the memory (124) of the user terminal (120).

13. The user terminal (120) of Claim 12, wherein the operations further comprise:
communicating (700, 800) the folder information to a folder ID repository node (104) via the network based on the generating; and
wherein the operation of identifying (710) applications missing from the memory (124) of the user terminal (120) that are members of the selected first one of the folders of the applications, comprises:
retrieving (802) from the folder ID repository node (104) via the network, a first list of applications that are members of the selected first one of the folders of the applications; and
comparing (804) the first list of applications to applications residing in the memory (124) of the user terminal (120) to identify applications missing from the memory (124) of the user terminal (120) that are members of the selected first one of the folders of the applications.

14. The user terminal (120) of any of Claims 12-13, wherein the operations further comprise:
generating (900) a message containing an address link used to retrieve of at least a portion of the folder information from the folder ID repository node (104); and
communicating (902) the message to other user terminals (120) and/or posting the message on a social media service network node for retrieval by other user terminals (120).

15. The user terminal (120) of any of Claim 12-14, wherein the operations further comprise:
querying (1000) the folder ID repository node (104) to obtain folder information that defines a second folder of the applications, that was provided to the folder ID repository node (104) by another user terminal (120) for sharing with other users of the folder ID repository node (104), and that satisfies a search criteria defined by the user terminal (120);
identifying (1002) applications missing from the memory (124) of the user terminal (120) that are members of the second folder of the applications; and
downloading (1004), via the network to the memory (124) of the user terminal (120), the applications identified as missing from the memory (124) of the user terminal (120) that are members of the second folder of the applications.

16. The user terminal (120) of Claim 15, wherein the operations further comprise:
adding (1100) to the action rule information, a second rule for the second folder of the applications that defines an event that will initiate deletion of the second folder of the applications from the memory (124) of the user terminal (120);
determining (1102) that the second rule is satisfied by occurrence of the event; and
deleting (1104) the second folder of the applications from the memory (124) of the user terminal (120).

17. The user terminal (120) of Claim 15, wherein the operation of querying (1000) the folder ID repository node (104) to obtain folder information that defines the second folder of the applications, comprises:
receiving (1200), from the folder ID repository node (104), shared folder information defining a plurality of folders of applications that were provided to the folder ID repository node (104) by one or more other user terminals (120) and which satisfy the search criteria;
displaying (1202), on a display device of the user terminal (120), the shared folder information; and
receiving (1204), via a user interface of the user terminal (120), a user selection of the second folder of the applications among other folders of the applications defined by the shared folder information.

18. A method by at least one network node (102, 104, 106, 1800), which includes a folder ID repository node (104) of a distributed computing system (100), for managing which applications are downloaded to user terminals (120), the method comprising the steps of:
receiving (1500) folder information via the network from a plurality of user terminals (120), wherein the folder information defines folders of applications that the user terminals (120) can select among for downloading;
receiving (1502) a query from one of the user terminals (120) that identifies a search criteria for searching among the folders of applications defined by the folder information;
identifying (1504) one of the folders of applications that satisfies the search criteria; and
communicating (1506) a list of the applications within the identified one of the folders of applications, to the one of the user terminals (120).

19. The method of Claim 18, wherein the step of identifying one of the folders of applications that satisfies the search criteria, comprises:
generating (1600) shared folder information defining a plurality of the folders of applications that satisfies the search criteria;
communicating (1602) the shared folder information to the one of the user terminals (120) for display on a display device;
receiving (1604) from the one of the user terminals (120), information indicating a user selection of the one of the folders of applications; and
identifying (1606) the one of the folders of applications that satisfies the search criteria responsive to the information indicating the user selection.

20. The method of any of Claims 18, wherein the at least one node further comprises an application storage node (102) that stores applications, and further comprising the steps of:
receiving (1700) a download command from the one of the user terminals (120) requesting downloading of the identified one of the folders of applications; and
downloading (1702) each of the applications within the identified one of the folders of applications from the application storage node (102) to the one of the user terminals (120).

## Patentansprüche

1. Verfahren durch ein Benutzerendgerät (120) zur Handhabung von Anwendungen, die vom Benutzerendgerät (120) ausgeführt werden können, wobei das Verfahren die folgenden Schritte umfasst:
Erzeugen (700) von Ordnerinformationen, die Ordner der Anwendungen definieren, und Speichern der Ordnerinformationen in einem Repositoryknoten;
Erzeugen (704) von Aktionsregelinformationen, die für jeden der Ordner von Anwendungen eine Aktion, die am Ordner von Anwendungen ausgeführt werden soll, und eine Regel definieren, welche die Ausführung der Aktion auslöst;
Bestimmen (706), dass eine erste der Regeln erfüllt wird;
Auswählen (708) eines ersten der Ordner der Anwendungen, der mit der erfüllten ersten der Regeln assoziiert ist;
Identifizieren (710) von Anwendungen, die in einem Speicher (124) des Benutzerendgeräts (120) fehlen und die Mitglieder des ausgewählten ersten der Ordner der Anwendungen sind, durch Abrufen einer Liste von Anwendungen vom Repositoryknoten; und
Herunterladen (714) der identifizierten Anwendungen von einem Anwendungsspeicherknoten (102) über ein Netzwerk (110) in den Speicher (124) des Benutzerendgeräts (120).

2. Verfahren nach Anspruch 1,
ferner umfassend den Schritt des Kommunizierens (700, 800) der Ordnerinformationen über das Netzwerk basierend auf dem Erzeugen an einen Ordner-Identifikations, ID,-Repositoryknoten (104); und wobei der Schritt des Identifizierens (710) von Anwendungen, die im Speicher (124) des Benutzerendgeräts (120) fehlen und die Mitglieder des ausgewählten ersten der Ordner der Anwendungen sind,
umfasst:
Abrufen (802) einer ersten Liste von Anwendungen, die Mitglieder des ausgewählten ersten der Ordner der Anwendungen sind, über das Netzwerk vom Ordner-ID-Repositoryknoten (104); und
Vergleichen (804) der ersten Liste von Anwendungen mit Anwendungen, die sich im Speicher (124) des Benutzerendgeräts (120) befinden, um Anwendungen zu identifizieren, die im Speicher (124) des Benutzerendgeräts (120) fehlen und die Mitglieder des ausgewählten ersten der Ordner der Anwendungen sind.

3. Verfahren nach Anspruch 2, ferner umfassend die folgenden Schritte:
Erzeugen (900) einer Nachricht, die eine Adressverknüpfung enthält, die zum Abrufen mindestens eines Teils der Ordnerinformationen vom Ordner-ID-Repositoryknoten (104) verwendet wird; und
Kommunizieren (902) der Nachricht an andere Benutzerendgeräte (120) und/oder Posten der Nachricht auf einem Netzwerkknoten für Social-Media-Dienste zum Abrufen durch andere Benutzerendgeräte (120).

4. Verfahren nach Anspruch 2, ferner umfassend die folgenden Schritte:
Abfragen (1000) des Ordner-ID-Repositoryknotens (104), um Ordnerinformationen zu erhalten, die einen zweiten Ordner von Anwendungen definieren, der für den Ordner-ID-Repositoryknoten (104) durch ein anderes Benutzerendgerät (120) zum Teilen mit anderen Benutzern des Ordner-ID-Repositoryknotens (104) bereitgestellt wurde und der ein vom Benutzerendgerät (120) definiertes Suchkriterium erfüllt;
Identifizieren (1002) von Anwendungen, die im Speicher (124) des Benutzerendgeräts (120) fehlen und die Mitglieder des zweiten Ordners der Anwendungen sind; und
Herunterladen (1004) der Anwendungen, die als im Speicher (124) des Benutzerendgeräts (120) fehlend identifiziert werden und die Mitglieder des zweiten Ordners der Anwendungen sind, über das Netzwerk (110) in den Speicher (124) des Benutzerendgeräts (120).

5. Verfahren nach Anspruch 4, ferner umfassend den folgenden Schritt:
Hinzufügen (1100) einer zweiten Regel für den zweiten Ordner der Anwendungen zu den Aktionsregelinformationen, die ein Ereignis definiert, das Löschung des zweiten Ordners der Anwendungen aus dem Speicher (124) des Benutzerendgeräts (120) auslöst;
Bestimmen (1102), dass die zweite Regel durch das Eintreten des Ereignisses erfüllt wird; und
Löschen (1104) des zweiten Ordners der Anwendungen aus dem Speicher (124) des Benutzerendgeräts (120).

6. Verfahren nach Anspruch 4, wobei der Schritt des Abfragens (1000) des Ordner-ID-Repository-Knotens (104) zum Erhalten von Ordnerinformationen, die den zweiten Ordner der Anwendungen definieren, umfasst:
Empfangen (1200) geteilter Ordnerinformationen vom Ordner-ID-Repositoryknoten (104), die eine Mehrzahl von Ordnern von Anwendungen definieren, die für den Ordner-ID-Repositoryknoten (104) durch ein oder mehrere andere Benutzerendgeräte (120) bereitgestellt wurden und die das Suchkriterium erfüllen;
Anzeigen (1202) der geteilten Ordnerinformationen auf einer Anzeigevorrichtung des Benutzerendgeräts (120); und
Empfangen (1204) einer Benutzerauswahl des zweiten Ordners der Anwendungen unter anderen Ordnern der Anwendungen, die durch die geteilten Ordnerinformationen definiert werden, über eine Benutzerschnittstelle des Benutzerendgeräts (120).

7. Verfahren nach einem der Ansprüche 2 bis 6, umfassend die folgenden Schritte:
Bestimmen (1300), dass eine dritte der Regeln erfüllt wird;
Auswählen (1302) eines dritten der Ordner der Anwendungen, der mit der erfüllten dritten der Regeln assoziiert ist;
Abrufen (1304) einer dritten Liste von Anwendungen, die Mitglieder des ausgewählten dritten der Ordner der Anwendungen sind, über das Netzwerk vom Ordner-ID-Repositoryknoten (104); und
Vergleichen (1306) der dritten Liste von Anwendungen mit Anwendungen, die sich im Speicher (124) des Benutzerendgeräts (120) befinden, um weitere Anwendungen zu identifizieren, die im Speicher (124) des Benutzerendgeräts (120) fehlen und die Mitglieder des ausgewählten dritten der Ordner der Anwendungen sind; und
Herunterladen (1306) der identifizierten weiteren Anwendungen vom Anwendungsspeicherknoten (102) über das Netzwerk in den Speicher (124) des Benutzerendgeräts (120).

8. Verfahren nach einem der Ansprüche 1 bis 7, umfassend die folgenden Schritte:
Bestimmen (1400), dass eine vierte der Regeln erfüllt wird, wobei die vierte der Regeln ein Ereignis definiert, das Löschung des ersten der Ordner der Anwendungen aus dem Speicher (124) des Benutzerendgeräts (120) auslöst; und
Löschen (1402) von Anwendungen des ausgewählten ersten der Ordner der Anwendungen aus dem Speicher (124) des Benutzerendgeräts (120) in Reaktion auf die erfüllte vierte der Regeln.

9. Verfahren nach einem der Ansprüche 1 bis 8, wobei:
die erste der Regeln ein geografisches Gebiet definiert; und
der Schritt des Bestimmens (706), dass die erste der Regeln erfüllt wird, ein Bestimmen (404) umfasst, dass sich das Benutzerendgerät (120) in das geografische Gebiet bewegt hat.

10. Verfahren nach Anspruch 8, wobei:
die vierte der Regeln eine verstrichene Zeit definiert; und
der Schritt des Bestimmens (1600), dass die vierte der Regeln erfüllt wird, ein Bestimmen (404) umfasst, dass die verstrichene Zeit verstrichen ist, seit der erste der Ordner der Anwendungen vom Anwendungsspeicherknoten (102) in den Speicher (124) des Benutzerendgeräts (120) heruntergeladen wurde.

11. Verfahren nach einem der Ansprüche 8, wobei:
die vierte der Regeln ein geografisches Gebiet definiert; und
der Schritt des Bestimmens (1600), dass die vierte der Regeln erfüllt wird, ein Bestimmen (404), dass das Benutzerendgerät (120) in das geografische Gebiet zurückgekehrt ist, nach dem Bestimmen umfasst, dass es das geografische Gebiet verlassen hat.

12. Benutzerendgerät (120), umfassend:
mindestens einen Prozessor (122); und
mindestens einen Speicher (124), der mit dem mindestens einen Prozessor (122) gekoppelt ist und computerlesbaren Programmcode umfasst, der in dem mindestens einen Speicher (124) enthalten ist und der bei Ausführung durch den mindestens einen Prozessor (122) den mindestens einen Prozessor (122) zum Durchführen von Vorgängen veranlasst, die umfassen:
Erzeugen (700) von Ordnerinformationen, die Ordner der Anwendungen definieren, und Speichern der Ordnerinformationen in einem Repositoryknoten;
Erzeugen (704) von Aktionsregelinformationen, die für jeden der Ordner von Anwendungen eine Aktion, die am Ordner von Anwendungen ausgeführt werden soll, und eine Regel definieren, welche die Ausführung der Aktion auslöst;
Bestimmen (706), dass eine erste der Regeln erfüllt wird;
Auswählen (708) eines ersten der Ordner der Anwendungen, der mit der erfüllten ersten der Regeln assoziiert ist;
Identifizieren (710) von Anwendungen, die in einem Speicher (124) des Benutzerendgeräts (120) fehlen und die Mitglieder des ausgewählten ersten der Ordner der Anwendungen sind, durch Abrufen einer Liste von Anwendungen vom Repositoryknoten; und
Herunterladen (714) der identifizierten Anwendungen von einem Anwendungsspeicherknoten (102) über ein Netzwerk in den Speicher (124) des Benutzerendgeräts (120).

13. Benutzerendgerät (120) nach Anspruch 12, wobei die Vorgänge ferner umfassen:
Kommunizieren (700, 800) der Ordnerinformationen über das Netzwerk basierend auf dem Erzeugen an einen Ordner-ID-Repositoryknoten (104); und
wobei der Vorgang des Identifizierens (710) von Anwendungen, die im Speicher (124) des Benutzerendgeräts (120) fehlen und die Mitglieder des ausgewählten ersten der Ordner der Anwendungen sind, umfasst:
Abrufen (802) einer ersten Liste von Anwendungen, die Mitglieder des ausgewählten ersten der Ordner der Anwendungen sind, über das Netzwerk vom Ordner-ID-Repositoryknoten (104); und
Vergleichen (804) der ersten Liste von Anwendungen mit Anwendungen, die sich im Speicher (124) des Benutzerendgeräts (120) befinden, um Anwendungen zu identifizieren, die im Speicher (124) des Benutzerendgeräts (120) fehlen und die Mitglieder des ausgewählten ersten der Ordner der Anwendungen sind.

14. Benutzerendgerät (120) nach einem der Ansprüche 12 bis 13, wobei die Vorgänge ferner umfassen:
Erzeugen (900) einer Nachricht, die eine Adressverknüpfung enthält, die zum Abrufen mindestens eines Teils der Ordnerinformationen vom Ordner-ID-Repositoryknoten (104) verwendet wird; und
Kommunizieren (902) der Nachricht an andere Benutzerendgeräte (120) und/oder Posten der Nachricht auf einem Netzwerkknoten für Social-Media-Dienste zum Abrufen durch andere Benutzerendgeräte (120).

15. Benutzerendgerät (120) nach einem der Ansprüche 12 bis 14, wobei die Vorgänge ferner umfassen:
Abfragen (1000) des Ordner-ID-Repositoryknotens (104), um Ordnerinformationen zu erhalten, die einen zweiten Ordner von Anwendungen definieren, der für den Ordner-ID-Repositoryknoten (104) durch ein anderes Benutzerendgerät (120) zum Teilen mit anderen Benutzern des Ordner-ID-Repositoryknotens (104) bereitgestellt wurde und der ein vom Benutzerendgerät (120) definiertes Suchkriterium erfüllt;
Identifizieren (1002) von Anwendungen, die im Speicher (124) des Benutzerendgeräts (120) fehlen und die Mitglieder des zweiten Ordners der Anwendungen sind; und
Herunterladen (1004) der Anwendungen, die als im Speicher (124) des Benutzerendgeräts (120) fehlend identifiziert werden und die Mitglieder des zweiten Ordners der Anwendungen sind, über das Netzwerk in den Speicher (124) des Benutzerendgeräts (120).

16. Benutzerendgerät (120) nach Anspruch 15, wobei die Vorgänge ferner umfassen:
Hinzufügen (1100) einer zweiten Regel für den zweiten Ordner der Anwendungen zu den Aktionsregelinformationen, die ein Ereignis definiert, das Löschung des zweiten Ordners der Anwendungen aus dem Speicher (124) des Benutzerendgeräts (120) auslöst;
Bestimmen (1102), dass die zweite Regel durch das Eintreten des Ereignisses erfüllt wird; und
Löschen (1104) des zweiten Ordners der Anwendungen aus dem Speicher (124) des Benutzerendgeräts (120).

17. Benutzerendgerät (120) nach Anspruch 15, wobei der Vorgang des Abfragens (1000) des Ordner-ID-Repository-Knotens (104) zum Erhalten von Ordnerinformationen, die den zweiten Ordner der Anwendungen definieren, umfasst:
Empfangen (1200) geteilter Ordnerinformationen vom Ordner-ID-Repositoryknoten (104), die eine Mehrzahl von Ordnern von Anwendungen definieren, die für den Ordner-ID-Repositoryknoten (104) durch ein oder mehrere andere Benutzerendgeräte (120) bereitgestellt wurden und die das Suchkriterium erfüllen;
Anzeigen (1202) der geteilten Ordnerinformationen auf einer Anzeigevorrichtung des Benutzerendgeräts (120); und
Empfangen (1204) einer Benutzerauswahl des zweiten Ordners der Anwendungen unter anderen Ordnern der Anwendungen, die durch die geteilten Ordnerinformationen definiert werden, über eine Benutzerschnittstelle des Benutzerendgeräts (120).

18. Verfahren durch mindestens einen Netzwerkknoten (102, 104, 106, 1800), der einen Ordner-ID-Repositoryknoten (104) eines verteilten Computersystems (100) umfasst, zur Handhabung dessen, welche Anwendungen auf Benutzerendgeräte (120) heruntergeladen werden, wobei das Verfahren die folgenden Schritte umfasst:
Empfangen (1500) von Ordnerinformationen über das Netzwerk von einer Mehrzahl von Benutzerendgeräten (120), wobei die Ordnerinformationen Ordner von Anwendungen definieren, unter welchen die Benutzerendgeräte (120) zum Herunterladen auswählen können;
Empfangen (1502) einer Abfrage von einem der Benutzerendgeräte (120), die ein Suchkriterium zum Suchen unter den Ordnern von Anwendungen identifizieren, der durch die Ordnerinformationen definiert wird;
Identifizieren (1504) eines der Ordner von Anwendungen, der das Suchkriterium erfüllt; und
Kommunizieren (1506) einer Liste von Anwendungen innerhalb des identifizierten der Ordner von Anwendungen an das eine der Benutzerendgeräte (120).

19. Verfahren nach Anspruch 18, wobei der Schritt des Identifizierens eines der Ordner von Anwendungen, der das Suchkriterium erfüllt, umfasst:
Erzeugen (1600) geteilter Ordnerinformationen, die eine Mehrzahl der Ordner von Anwendungen definieren, die das Suchkriterium erfüllen;
Kommunizieren (1602) der geteilten Ordnerinformationen an das eine der Benutzerendgeräte (120) zur Anzeige auf einer Anzeigevorrichtung;
Empfangen (1604) von Informationen, die eine Benutzerauswahl des einen der Ordner von Anwendungen angeben, von dem einen der Benutzerendgeräte (120); und
Identifizieren (1606) des einen der Ordner von Anwendungen, der das Suchkriterium erfüllt, in Reaktion auf die Informationen, welche die Benutzerauswahl angeben.

20. Verfahren nach einem er Ansprüche 18, wobei der mindestens eine Knoten ferner einen Anwendungsspeicherknoten (102) umfasst, der Anwendungen speichert, und ferner umfassend die folgenden Schritte:
Empfangen (1700) eines Herunterladebefehls, der ein Herunterladen des identifizierten der Ordner von Anwendungen anfordert, von dem einen der Benutzerendgeräte (120); und
Herunterladen (1702) einer jeden der Anwendungen innerhalb des identifizierten der Ordner von Anwendungen vom Anwendungsspeicherknoten (102) auf das eine der Benutzerendgeräte (120).

## Revendications

1. Procédé, par un terminal d'utilisateur (120), pour gérer des applications exécutables par le terminal d'utilisateur (120), le procédé comprenant les étapes de :
la génération (700) d'informations de dossiers qui définissent des dossiers des applications et la mémorisation des informations de dossiers dans un noeud de répertoire ;
la génération (704) d'informations de règles d'action qui définissent, pour chacun des dossiers des applications, une action à effectuer sur le dossier d'applications et une règle qui déclenche une exécution de l'action ;
la détermination (706) qu'une première règle parmi les règles est remplie ;
la sélection (708) d'un premier dossier parmi les dossiers des applications associées à la première règle remplie parmi les règles ;
l'identification (710) d'applications manquant à une mémoire (124) du terminal d'utilisateur (120) qui sont des membres du premier dossier sélectionné parmi les dossiers des applications par la récupération d'une liste d'applications à partir du noeud de répertoire ; et
le téléchargement (714) des applications identifiées à partir d'un noeud de mémorisation d'applications (102) par l'intermédiaire d'un réseau (110) dans la mémoire (124) du terminal d'utilisateur (120).

2. Procédé selon la revendication 1,
comprenant en outre l'étape de la communication (700, 800) des informations de dossiers à un noeud de répertoire d'identification, ID, de dossier (104) par l'intermédiaire du réseau sur la base de la génération ;
et
dans lequel l'étape de l'identification (710) des applications manquant à la mémoire (124) du terminal d'utilisateur (120) qui sont des membres du premier dossier sélectionné parmi les dossiers des applications comprend :
la récupération (802), à partir du noeud de répertoire d'ID de dossier (104) par l'intermédiaire du réseau, d'une première liste d'applications qui sont des membres du premier dossier sélectionné parmi les dossiers des applications ; et
la comparaison (804) de la première liste d'applications à des applications résidant dans la mémoire (124) du terminal d'utilisateur (120) pour identifier des applications manquant à la mémoire (124) du terminal d'utilisateur (120) qui sont des membres du premier dossier sélectionné parmi les dossiers des applications.

3. Procédé selon la revendication 2, comprenant en outre les étapes de :
la génération (900) d'un message contenant un lien d'adresse utilisé pour la récupération d'au moins une portion des informations de dossiers à partir du noeud de répertoire d'ID de dossier (104) ; et
la communication (902) du message à d'autres terminaux d'utilisateur (120) et/ou l'affichage du message sur un noeud de réseau de services de réseaux sociaux pour la récupération par d'autres terminaux d'utilisateur (120) .

4. Procédé selon la revendication 2, comprenant en outre les étapes de :
l'interrogation (1000) du noeud de répertoire d'ID de dossier (104) pour obtenir des informations de dossiers qui définissent un deuxième dossier des applications, qui a été fourni au noeud de répertoire d'ID de dossier (104) par un autre terminal d'utilisateur (120) pour le partager avec d'autres utilisateurs du noeud de répertoire d'ID de dossier (104) et qui remplit un critère de recherche défini par le terminal d'utilisateur (120) ;
l'identification (1002) d'applications manquant à la mémoire (124) du terminal d'utilisateur (120) qui sont des membres du deuxième dossier des applications ; et
le téléchargement (1004), par l'intermédiaire du réseau (110) dans la mémoire (124) du terminal d'utilisateur (120), des applications identifiées comme manquant à la mémoire (124) du terminal d'utilisateur (120) qui sont des membres du deuxième dossier des applications.

5. Procédé selon la revendication 4, comprenant en outre l'étape de :
l'ajout (1100), aux informations de règles d'action, d'une deuxième règle pour le deuxième dossier des applications qui définit un événement qui déclenche une suppression du deuxième dossier des applications de la mémoire (124) du terminal d'utilisateur (120) ;
la détermination (1102) que la deuxième règle est remplie par une survenance de l'événement ; et
la suppression (1104) du deuxième dossier des applications de la mémoire (124) du terminal d'utilisateur (120).

6. Procédé selon la revendication 4, dans lequel l'étape de l'interrogation (1000) du noeud de répertoire d'ID de dossier (104) pour obtenir des informations de dossiers qui définissent le deuxième dossier des applications comprend :
la réception (1200), en provenance du noeud de répertoire d'ID de dossier (104), d'informations de dossiers partagés définissant une pluralité de dossiers d'applications qui ont été fournis au noeud de répertoire d'ID de dossier (104) par au moins un autre terminal d'utilisateur (120) et qui remplissent le critère de recherche ;
l'affichage (1202), sur un dispositif d'affichage du terminal d'utilisateur (120), des informations de dossiers partagés ; et
la réception (1204), par l'intermédiaire d'une interface d'utilisateur du terminal d'utilisateur (120), d'une sélection d'utilisateur du deuxième dossier des applications parmi d'autres dossiers des applications définis par les informations de dossiers partagés.

7. Procédé selon l'une quelconque des revendications 2 à 6, comprenant en outre les étapes de :
la détermination (1300) qu'une troisième règle parmi les règles est remplie ;
la sélection (1302) d'un troisième dossier parmi les dossiers des applications associés à la troisième règle remplie parmi les règles ;
la récupération (1304), à partir du noeud de répertoire d'ID de dossier (104) par l'intermédiaire du réseau, d'une troisième liste d'applications qui sont des membres du troisième dossier sélectionné parmi les dossiers des applications ;
la comparaison (1306) de la troisième liste d'applications à des applications résidant dans la mémoire (124) du terminal d'utilisateur (120) pour identifier d'autres applications manquant à la mémoire (124) du terminal d'utilisateur (120) qui sont des membres du troisième dossier sélectionné parmi les dossiers des applications ; et
le téléchargement (1306) des autres applications identifiées à partir du noeud de mémorisation d'applications (102) par l'intermédiaire du réseau dans la mémoire (124) du terminal d'utilisateur (120).

8. Procédé selon l'une quelconque des revendications 1 à 7, comprenant en outre les étapes de :
la détermination (1400) qu'une quatrième règle parmi les règles est remplie, dans lequel la quatrième règle parmi les règles définit un événement qui déclenche une suppression du premier dossier parmi les dossiers des applications de la mémoire (124) du terminal d'utilisateur (120) ; et
la suppression (1402) d'applications du premier dossier sélectionné parmi les dossiers des applications de la mémoire (124) du terminal d'utilisateur (120) en réponse à la quatrième règle remplie parmi les règles.

9. Procédé selon l'une quelconque des revendications 1 à 8, dans lequel :
la première règle parmi les règles définit une zone géographique ; et
l'étape de la détermination (706) que la première règle parmi les règles est remplie comprend :
la détermination (404) que le terminal d'utilisateur (120) s'est déplacé dans la zone géographique.

10. Procédé selon la revendication 8, dans lequel :
la quatrième règle parmi les règles définit un temps écoulé ; et
l'étape de la détermination (1600) que la quatrième règle parmi les règles est remplie comprend la détermination (404) que le temps écoulé s'est écoulé depuis que le premier dossier parmi les dossiers des applications a été téléchargé à partir du noeud de mémorisation d'applications (102) dans la mémoire (124) du terminal d'utilisateur (120).

11. Procédé selon la revendication 8, dans lequel :
la quatrième règle parmi les règles définit une zone géographique ; et
l'étape de la détermination (1600) que la quatrième règle parmi les règles est remplie comprend la détermination (404) que le terminal d'utilisateur (120) est revenu dans la zone géographique après la détermination de sa sortie de la zone géographique.

12. Terminal d'utilisateur (120) comprenant :
au moins un processeur (122) ; et
au moins une mémoire (124) couplée à l'au moins un processeur (122) et comprenant un code de programme lisible par ordinateur mémorisé dans l'au moins une mémoire (124) qui, lorsqu'il est exécuté par l'au moins un processeur (122), amène l'au moins un processeur (122) à effectuer des opérations comprenant :
la génération (700) d'informations de dossiers qui définissent des dossiers des applications et la mémorisation des informations de dossiers dans un noeud de répertoire ;
la génération (704) d'informations de règles d'action qui définissent, pour chacun des dossiers des applications, une action à effectuer sur le dossier d'applications et une règle qui déclenche une exécution de l'action ;
la détermination (706) qu'une première règle parmi les règles est remplie ;
la sélection (708) d'un premier dossier parmi les dossiers des applications associées à la première règle remplie parmi les règles ;
l'identification (710) d'applications manquant à une mémoire (124) du terminal d'utilisateur (120) qui sont des membres du premier dossier sélectionné parmi les dossiers des applications par la récupération d'une liste d'applications à partir du noeud de répertoire ; et
le téléchargement (714) des applications identifiées à partir d'un noeud de mémorisation d'applications (102) par l'intermédiaire d'un réseau (110) dans la mémoire (124) du terminal d'utilisateur (120).

13. Terminal d'utilisateur (120) selon la revendication 12, dans lequel les opérations comprennent en outre :
la communication (700, 800) des informations de dossiers à un noeud de répertoire d'ID de dossier (104) par l'intermédiaire du réseau sur la base de la génération ; et
dans lequel l'opération de l'identification (710) des applications manquant à la mémoire (124) du terminal d'utilisateur (120) qui sont des membres du premier dossier sélectionné parmi les dossiers des applications comprend :
la récupération (802), à partir du noeud de répertoire d'ID de dossier (104) par l'intermédiaire du réseau, d'une première liste d'applications qui sont des membres du premier dossier sélectionné parmi les dossiers des applications ; et
la comparaison (804) de la première liste d'applications à des applications résidant dans la mémoire (124) du terminal d'utilisateur (120) pour identifier des applications manquant à la mémoire (124) du terminal d'utilisateur (120) qui sont des membres du premier dossier sélectionné parmi les dossiers des applications.

14. Terminal d'utilisateur (120) selon l'une quelconque des revendications 12 et 13, dans lequel les opérations comprennent en outre :
la génération (900) d'un message contenant un lien d'adresse utilisé pour la récupération d'au moins une portion des informations de dossiers à partir du noeud de répertoire d'ID de dossier (104) ; et
la communication (902) du message à d'autres terminaux d'utilisateur (120) et/ou l'affichage du message sur un noeud de réseau de services de réseaux sociaux pour la récupération par d'autres terminaux d'utilisateur (120) .

15. Terminal d'utilisateur (120) selon l'une quelconque des revendications 12 à 14, dans lequel les opérations comprennent en outre :
l'interrogation (1000) du noeud de répertoire d'ID de dossier (104) pour obtenir des informations de dossiers qui définissent un deuxième dossier des applications, qui a été fourni au noeud de répertoire d'ID de dossier (104) par un autre terminal d'utilisateur (120) pour le partager avec d'autres utilisateurs du noeud de répertoire d'ID de dossier (104) et qui remplit un critère de recherche défini par le terminal d'utilisateur (120) ;
l'identification (1002) d'applications manquant à la mémoire (124) du terminal d'utilisateur (120) qui sont des membres du deuxième dossier des applications ; et
le téléchargement (1004), par l'intermédiaire du réseau (110) dans la mémoire (124) du terminal d'utilisateur (120), des applications identifiées comme manquant à la mémoire (124) du terminal d'utilisateur (120) qui sont des membres du deuxième dossier des applications.

16. Terminal d'utilisateur (120) selon la revendication 15, dans lequel les opérations comprennent en outre :
l'ajout (1100), aux informations de règles d'action, d'une deuxième règle pour le deuxième dossier des applications qui définit un événement qui déclenche une suppression du deuxième dossier des applications de la mémoire (124) du terminal d'utilisateur (120) ;
la détermination (1102) que la deuxième règle est remplie par une survenance de l'événement ; et
la suppression (1104) du deuxième dossier des applications de la mémoire (124) du terminal d'utilisateur (120).

17. Terminal d'utilisateur (120) selon la revendication 15, dans lequel l'opération de l'interrogation (1000) du noeud de répertoire d'ID de dossier (104) pour obtenir des informations de dossiers qui définissent le deuxième dossier des applications comprend :
la réception (1200), en provenance du noeud de répertoire d'ID de dossier (104), d'informations de dossiers partagés définissant une pluralité de dossiers des applications qui ont été fournis au noeud de répertoire d'ID de dossier (104) par au moins un autre terminal d'utilisateur (120) et qui remplissent le critère de recherche ;
l'affichage (1202), sur un dispositif d'affichage du terminal d'utilisateur (120), des informations de dossiers partagés ; et
la réception (1204), par l'intermédiaire d'une interface d'utilisateur du terminal d'utilisateur (120), d'une sélection d'utilisateur du deuxième dossier des applications parmi d'autres dossiers des applications définis par les informations de dossiers partagés.

18. Procédé, par au moins un noeud de réseau (102, 104, 106, 1800) qui comprend un noeud de répertoire d'ID de dossier (104) d'un système informatique distribué (100), pour gérer des applications qui sont téléchargées dans des terminaux d'utilisateur (120), le procédé comprenant les étapes de :
la réception (1500) d'informations de dossiers par l'intermédiaire du réseau en provenance d'une pluralité de terminaux d'utilisateur (120), dans lequel les informations de dossiers définissent des dossiers d'applications que les terminaux d'utilisateur (120) peuvent sélectionner pour les télécharger ;
la réception (1502) d'une interrogation en provenance de l'un des terminaux d'utilisateur (120) qui identifie un critère de recherche pour rechercher parmi les dossiers d'applications définis par les informations de dossiers ;
l'identification (1504) de l'un des dossiers d'applications qui remplit le critère de recherche ; et
la communication (1506) d'une liste des applications à l'intérieur du dossier identifié parmi les dossiers d'applications, à l'un des terminaux d'utilisateur (120) .

19. Procédé selon la revendication 18, dans lequel l'étape de l'identification de l'un des dossiers d'applications qui remplit le critère de recherche comprend :
la génération (1600) d'informations de dossiers partagés définissant une pluralité de dossiers des applications qui remplissent le critère de recherche ;
la communication (1602) des informations de dossiers partagés au terminal d'utilisateur parmi les terminaux d'utilisateur (120) pour les afficher sur un dispositif d'affichage ;
la réception (1604), en provenance du terminal d'utilisateur parmi les terminaux d'utilisateur (120), d'informations indiquant une sélection d'utilisateur du dossier parmi les dossiers d'applications ; et
l'identification (1606) du dossier parmi les dossiers d'applications qui remplit le critère de recherche en réponse aux informations indiquant la sélection d'utilisateur.

20. Procédé selon la revendication 18, dans lequel l'au moins un noeud comprend en outre un noeud de mémorisation d'applications (102) qui mémorise des applications, et comprenant en outre les étapes de :
la réception (1700) d'une commande de téléchargement à partir de l'un des terminaux d'utilisateur (120) demandant le téléchargement du dossier identifié parmi les dossiers d'applications ; et
le téléchargement (1702) de chacune des applications à l'intérieur du dossier identifié parmi les dossiers d'applications à partir du noeud de mémorisation d'applications (102) dans le terminal d'utilisateur parmi les terminaux d'utilisateur (120).
